# EUROPÄISCHE PATENTANMELDUNG

(11) **EP 0 761 610 A2**
(43) Veröffentlichungstag der Anmeldung: **12.03.1997**
(21) Anmeldenummer: 96113174.5
(22) Anmeldetag: 16.08.1996
(51) Int. Cl.: C02F 9/00, C02F 1/32, C02F 1/44

(54) **Verfahren und Anlage zur Gewinnung von Brauchwasser aus Abwasser**

(30) Priorität: 18.08.1995 DE 19530426
(71) Anmelder: Weber, Erika, 57223 Kreuztal (DE)
(72) Erfinder: Weber, Reinhard, 57223 Kreuztal (DE)
(74) Vertreter: Valentin, Ekkehard, Dipl.-Ing.

(57) **Zusammenfassung**

Die Erfindung betrifft ein Verfahren und eine Anlage zur Gewinnung von Brauchwasser aus Abwasser durch Vorreinigen in einer Vorbehandlungsstufe, Nachreinigen des vorgereinigten Wassers von Fremdstoffen und/oder gelösten Verunreinigungen sowie Minimierung des Gehaltes an mitgeführten oder anfallenden Feststoffen, wobei das Wasser in einer Folge von Reinigungsschritten zu gereinigtem Brauchwasser aufbereitet wird. Diese umfassen:
1. Vorabscheiden von gröberen Schmutzpartikeln in einem Pufferbecken 1
2. Einstellen eines konstant vorgegebenen pH-Wertes 23
3. Aufbereiten des Wassers zu einer Klarphase durch
   3.1 physikalische Behandlung unter Einwirkung von Strahlungs- und Elektroenergie im Zusammenwirken mit Sauerstoff und eingebrachter Strömungsenergie auf schwerabbaubare Molekularverbindungen unter Ausfällen von freigesetzten Schwebstoffen in einem UV-Bestrahlungs-Reaktor 2 und in einem Reaktionskatalysator 3;
   3.2 Feststoffminimierung durch Mikrofiltration der mitgeführten und/oder ausgefällten Mikropartikeln mit Schlammaustrag aus dem System mit Hilfe eines Mikrofilters 4;
4. Endreinigen der Klarphase des Wassers durch Abscheiden von Lösungsanteilen noch nicht erfaßter Verbindungen mittels Osmosebehandlung in einer Osmosezelle 7.

## Beschreibung

Die Erfindung betrifft ein Verfahren zur Gewinnung von Brauchwasser aus Abwasser durch Vorreinigen in einer Vorbehandlungsstufe, Nachreinigen des vorgereinigten Wassers von Fremdstoffen und/oder gelösten Verunreinigungen sowie Minimierung des Gehaltes an mitgeführten oder anfallenden Feststoffen. Die Erfindung betrifft auch eine Anlage zur Durchführung des Verfahrens.

Die Industriegesellschaft ist intensiv bemüht, gebrauchte Stoffe durch Recycling in einen Wiederverwertungs-Kreislauf zu bringen, um so der weltweit vielfältigen Verschwendung kostbarer Ressourcen und Rohstoffe Einhalt zu gebieten.

Wasser ist ein kostbares Gut und ein ausgesprochener Wertstoff. Es ist statistisch erwiesen, daß der überwiegende Verbrauch an Wasser nicht durch heimische Haushalte, sondern durch industrielle Nutzung erfolgt. Das dabei anfallende und zum Teil nur gering verschmutzte Abwasser geht dabei zumeist für eine nochmalige Nutzung verloren und wird, wenn überhaupt, dem biologischer. Kreislauf wieder zugeführt. Dabei geht aber auch ein erheblicher Teil der bereits für die Aufbereitung von Brauchwasser investierten Energie und Arbeit verloren.

Die UNESCO fordert, daß der Rohstoff Wasser in Zukunft mindestens fünfmal genutzt werden muß, ehe er dem natürlichen Kreislauf zurückgegeben wird. Dies ist nicht nur sinnvoll wegen der Schonung des Wasserhaushaltes, sondern ebenso zweckmäßig im Hinblick auf den ökonomischen Aspekt einer mehrfachen Nutzung mit partieller Zwischenaufbereitung.

Verfahren und Anlagen zur Abwasseraufbereitung z.B. im kommunalen Sektor sind bekannt. Dabei handelt es sich um die Klärung mit Biomasse verunreinigter Abwässer in sogenannten Kläranlagen. Darin wird das Abwasser stufenweise durch Abscheiden von Sand und/oder größeren Stoffen zunächst vorgereinigt, sodann unter Einbringung von Strömungsenergie sowie von Sauerstoff biologisch aufgeschlossen. Die Trübstoffe werden bevorzugt mittels Flockungsmitteln zum Ausflocken gebracht, und nach Sedimentation als Schlamm ausgeschieden, wonach das geklärte Wasser dem biologischen Kreislauf zugeführt wird. Für eine industrielle oder häusliche Wiederverwendung ist das geklärte Abwasser jedoch unbrauchbar.

In der Zeitschrift 913 Journal Water Pollution Control Federation, 59 (1987) March, No. 3(I), Alexandria, VA, USA, Seiten 132 bis 138 ist unter der Überschrift "Analysis of full-scale SBR operation at Grundy Center, Iowa" ein Verfahren und eine Anlage zur Klärung von Abwasser beschrieben. Es handelt sich um einen periodischen Prozeß, der in großen erdgebundenen Reaktionsbecken durchgeführt wird, und zwar mit diskontinuierlichen Arbeitsschritten "FILL", "REACT", "SETTLE", "DRAW" und "IDLE". Der vollständige Zyklus dauert fallweise 12 bis 24 Stunden. Auch hier erfolgt der Aufschluß durch Einbringen von Sauerstoff und fallweise zusätzlichem Substrat zur Beschleunigung der Reaktion und der Sedimentation. Abgeschiedener Schlamm wird ebenfalls mit einem aeroben Verfahren aufgeschlossen und in Trockenbeeten zur weiteren Verwendung im Agrarbereich aufbereitet. Fallweise wird das Abwasser nach Vorklärung durch Chlorinen bakteriell gesäubert.

Auch dieses Verfahren und die entsprechende Anlage ist nicht geeignet, um bspw. in einem industriellen Wiederverwertungskreislauf aus industriellem Abwasser ein erneutes Brauchwasser zu gewinnen.

Der Erfindung liegt die Aufgabe zugrunde, ein Verfahren und eine Anlage zur Gewinnung von Brauchwasser aus Abwasser der eingangs genannten Art anzugeben, welche eine Mehrfachverwendung im Sinne der Anforderungen der UNESCO ermöglicht, bevor das mehrfach genutzte Wasser dem natürlichen Kreislauf zurückgegeben wird, und wobei die Abwasserbehandlung in einem vollautomatischen Prozeß mit elektrotechnischer Überwachung durch ein EDV-gesteuertes Rechnersystem bei hoher Wirtschaftlichkeit durchführbar ist.

Die Lösung der Aufgabe gelingt bei einem Verfahren entsprechend dem Oberbegriff von Anspruch 1 mit der Erfindung dadurch, daß das Wasser in einer Folge von Reinigungsschritten, umfassend:
1. Vorabscheiden von gröberen Schmutzpartikeln;
2. Einstellen eines konstant vorgegebenen pH-Wertes;
3. Aufbereiten des Wassers zu einer Klarphase durch
   3.1 physikalische Behandlung unter Einwirkung von Strahlungs- und Elektroenergie im Zusammenwirken mit Sauerstoff und eingebrachter Strömungsenergie auf schwerabbaubare Molekularverbindungen unter Ausfällen von freigesetzten Schwebstoffen;
   3.2 Feststoffminimierung durch Mikrofiltration der mitgeführten und/oder ausgefällten Mikropartikel mit Schlammaustrag aus dem System;
4. Endreinigen der Klarphase des Wassers durch Abscheiden von Lösungsanteilen noch nicht erfaßter Verbindungen mittels Osmosebehandlung;
zu gereinigtem Brauchwasser aufbereitet wird.

Dabei wird mit großem Vorteil ein gereinigtes Brauchwasser erhalten, welches je nach Einstellung der einstellbaren Betriebsparameter annähernd die Qualität von destilliertem Wasser aufweist.

Eine erfindungswesentliche und sehr wirkungsvolle Ausgestaltung des Verfahrens wird dadurch erreicht, daß die physikalische Behandlung in zwei Stufen durchgeführt wird, wobei das vorbehandelte und im pH-Wert eingestellte Wasser in einer ersten Stufe im Kreislauf durch ein UV-Bestrahlungsfeld geführt und dabei zugleich Luft als Sauerstoffträger zugeführt und in einer zweiten Stufe das so zur weiteren Aufbereitung vorbereitete Wasser im Kreislauf durch ein elektrisches Spannungsfeld hindurchgeleitet und dem Kreislaufwasser zugleich durch Einleiten von Luft, Sauerstoff und Strömungsenergie zugeführt wird.

Dabei wird mittels einer Mischfrequenz-Amplitudenmodulation ein Prozeß in einem Reaktions-Katalysator in Gang gesetzt, unterstützt von einer intensiven UV-Bestrahlung, die es ermöglicht, daß alle vorhandenen chemischen Verbindungen aufgespalten werden. Sowohl organische Verbindungen als auch komplex-gebundene Substanzen werden auf diese Weise getrennt. Unter den dabei extremen Bedingungen finden zahlreiche Dissoziationen statt, die schädliche Verbindungen in ihre Elemente aufspalten und die Voraussetzung für weitere Behandlungsstufen schaffen.

Eine für das Verfahren wesentliche und vorteilhafte Maßnahme ist dabei dadurch gegeben, daß die einzelnen Reinigungsschritte 1. bis 4. jeweils in separaten Reaktorbehältern durchgeführt werden. Dabei werden die Reinigungsschritte 1. bis 4. bevorzugt unter angepaßter Zufuhr von Strömungsenergie durch Verwendung einzelner, unabhängiger Umpumpen vorgenommen.

Ein besonderer Reinigungseffekt wird auch dadurch erzielt, daß aus einzelnen Stufen Wasser zum Rückspülen entnommen und einer oder mehreren vorhergehenden Stufen zugeführt wird.

Durch die spezielle Mikrofiltration wird der Feststoffanteil in der dadurch entstehenden Klarphase so minimiert und über eine Schneckenpresse ausgetragen, daß der Feststoffanteil dann nur noch ein- bis zweimal 10⁻³ des Gesamtvolumens der Abwassermenge beträgt. Das anfallende Filtrat wird dann je nach restlichem Verschmutzungsgrad durch eine ein- oder mehrstufige Umkehrosmose gepumpt, und das Permeat wird dem Produktionskreislauf und bevorzugt der Mikrofiltration wieder zugeführt.

Jede Stufe hat einen Rückspülanteil. Er dient der Reinigung und der Modul-Standzeitverlängerung. Dabei arbeitet die Anlage vollautomatisch und wird über ein Rechnersystem gesteuert, wodurch mit Vorteil die Wartung auf ein Minimum beschränkt ist. Im Gegensatz zu den meisten herkömmlichen Kläranlagen arbeitet das Verfahren ohne Zusatzchemikalien, lediglich etwas Säure oder Lauge wird zur Steuerung des pH-Wertes benötigt.

Eine Anlage zur Gewinnung von Brauchwasser aus Abwasser und insbesondere zur Durchführung des Verfahrens ist dadurch gekennzeichnet, daß sie wenigstens eine der Anzahl der Reinigungsstufen 1. bis 4. entsprechende Anzahl separater Behälter aufweist, die als funktionell zusammenwirkende Wasserreinigungsbatterie in Durchlaufrichtung des Wassers in Reihe geschaltet sind.

Dabei sieht eine wesentliche Ausgestaltung vor, daß jeder Behälter als Reaktor mit Mitteln für die Durchführung wenigstens eines in sich abgeschlossenen Arbeitsschrittes ausgebildet ist und insbesondere die im Kennzeichnungsteil von Anspruch 14 angegebenen Merkmale aufweist.

Und schließlich ist die Anlage dadurch gekennzeichnet, daß der UV-Betrahlungsreaktor an eine Kreislaufleitung mit einer darin angeordneten Kreislaufpumpe angeschlossen und diese Kreislaufleitung durch den elektrischen Katalyse-Reaktor hindurchführend ausgebildet ist.

Weitere Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1: einen schematischen Stammbaum der Anlage zur Gewinnung von Brauchwasser aus Abwasser;
- Figur 2: eine schematische Darstellung der Steuerung der Anlage gemäß Fig. 1;
- Figur 3: eine schematische Darstellung der UV-Bestrahlungsstation innerhalb der Wasseraufbereitungsanlage;
- Figur 4: eine schematische Darstellung der Mikrofiltrations-Station innerhalb der Wasseraufbereitungsanlage.

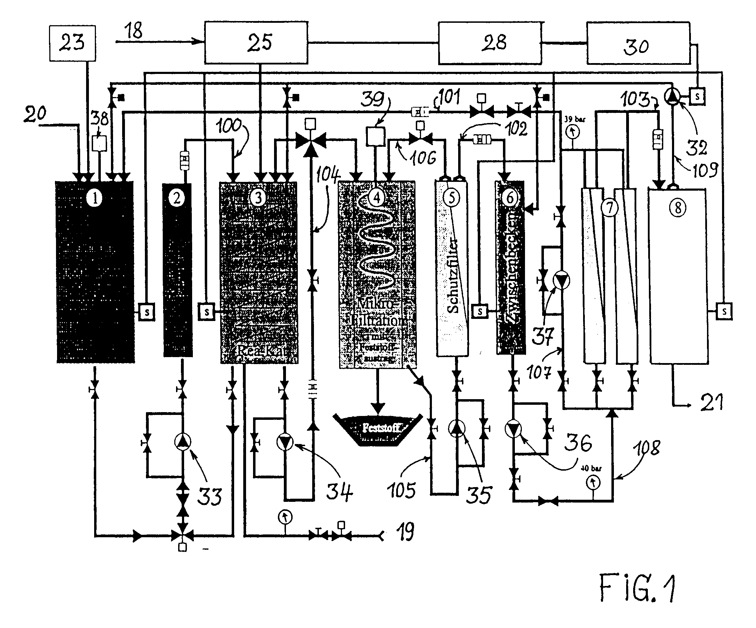

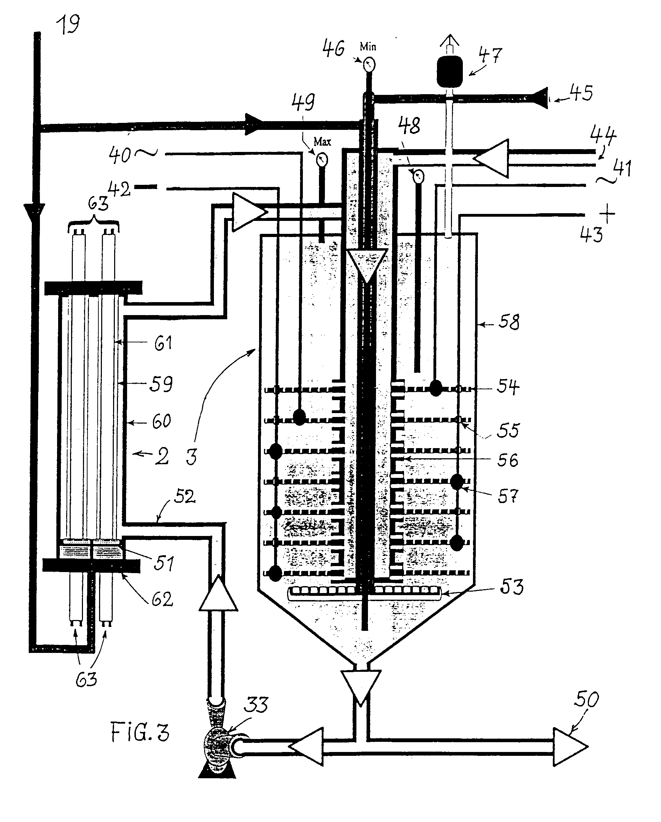

Die in Fig. 1 dargestellte Anlage zur Gewinnung von Brauchwasser aus Abwasser weist in besonderer Ausbildung zur Durchführung des erfindungsgemäßen Verfahrens wenigstens eine der Anzahl von Reinigungsstufen entsprechende Anzahl separater Behälter 1 bis 8 auf. Diese sind als funktionell zusammenwirkende Wasserreinigungsbatterie in Durchlaufrichtung des Wassers in Reihe geschaltet. Ein erster Behälter 1 ist im wesentlichen als Pufferbecken zur Aufnahme eines Tagesbedarfs von Wasser, ferner mit einem Rührwerk 38 sowie mit pH-Meß- und Einstellmitteln 23 ausgebildet. In den Behälter 1 wird mit der Leitung 20 das mit Schmutz befrachtete Abwasser eingeleitet. Dabei wird erforderlichenfalls ein pH-Sollwert eingestellt und durch laufende Korrekturen in vorgesehenen Grenzen gehalten. Im wesentlichen kann die Regelung so vorgenommen werden, daß das Abwasser über pH 4 und unter pH 9 aufweist. Der Wert wird durch Zugabe von Lauge oder Säure automatisch eingestellt. Das Rührwerk 38 dient zur ständigen Bewegung der Schmutzfracht, um ein Absetzen von Sinkstoffen im Behälter 1 zu vermeiden. Mit S an den Behältereinheiten 1, 3, 6 und 8 sind Meßsondeneinheiten zur durchgehenden Überwachung von Leitwert, pH-Wert und/oder Sauerstoffgehalt gekennzeichnet. Der Behälter 3 ist, wie dies im einzelnen bestens aus der Fig. 3 erkennbar ist, mit einer Anzahl kaskadenförmig angeordneter Elektroden 54 mit Spannungszuführungen 40 bis 43 zum Aufbau eines elektrischen Spannungsfeldes als Reaktor-Katalysator ausgebildet und weist einen im Nebenschluß angeordneten UV-Bestrahlungsreaktor 2 mit Luftzufuhrorganen 51 auf. Zur Aufrechterhaltung einer Kreislaufströmung durch die Behälter 2 und 3 dient die Kreislaufpumpe 33.

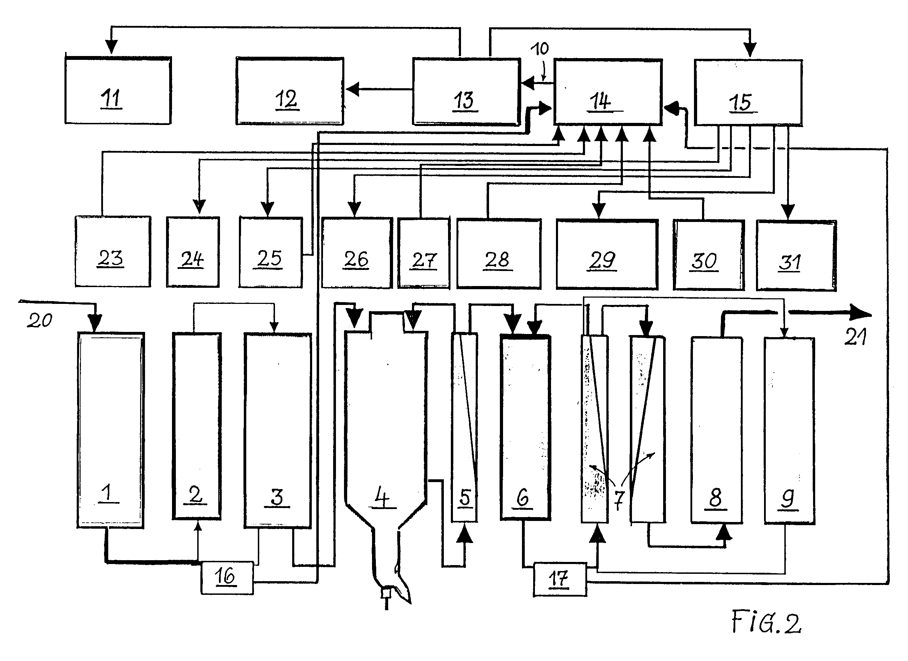

Mit der Ziffer 18 ist die Energieeinspeisung in das System der Anlage vorgesehen, ein Mischfrequenz-Generator 25 dient der Erzeugung mischfrequenter Ströme. Durch deren Einleitung in den Wasserkreislauf wird dieses ionisiert und zum Flocken gebracht. Die mischfrequenten Ströme werden gemäß Schaltbild der Fig. 2 mit dem Rechner 13 nach anzugebenden Parametern errechnet und vorgegeben. In dem Reaktionsbehälter 2, der auch als UV-Bestrahlungskanone bezeichnet werden kann, wird das voraufbereitete Abwasser durch ein pneumatisch gesteuertes UV-Bestrahlungsfeld gepumpt. Ein Teil der Schadstoffe wird dabei zur Ausfällung gebracht und/oder neutralisiert. Durch gezielt auszuwählende UV-Bestrahlung im wiederholten Durchlauf des behandelten Wassers werden bestimmte chemische Verbindungen aufgeschlossen und somit zur weiteren Ausscheidung bspw. in der folgenden Mikrofiltration des Behälters 4 oder in den Osmosestufen 7 vorbereitet.

In der Zirkulationsleitung 100 zwischen den Behältern 2 und 3 ist eine mit D bezeichnete Durchflußmeßeinheit vorgesehen. Weitere derartige Meßeinheiten D sind in der Rückstromleitung 101, der Kommunikationsleitung 102 zwischen den Behältern 5 und 6 und in der Verbindungsleitung 103 zwischen den Behältern 7 und 8 vorgesehen, ebenfalls in der Verbindungsleitung 104, welche die Behälter 3 und 4 verbindet.

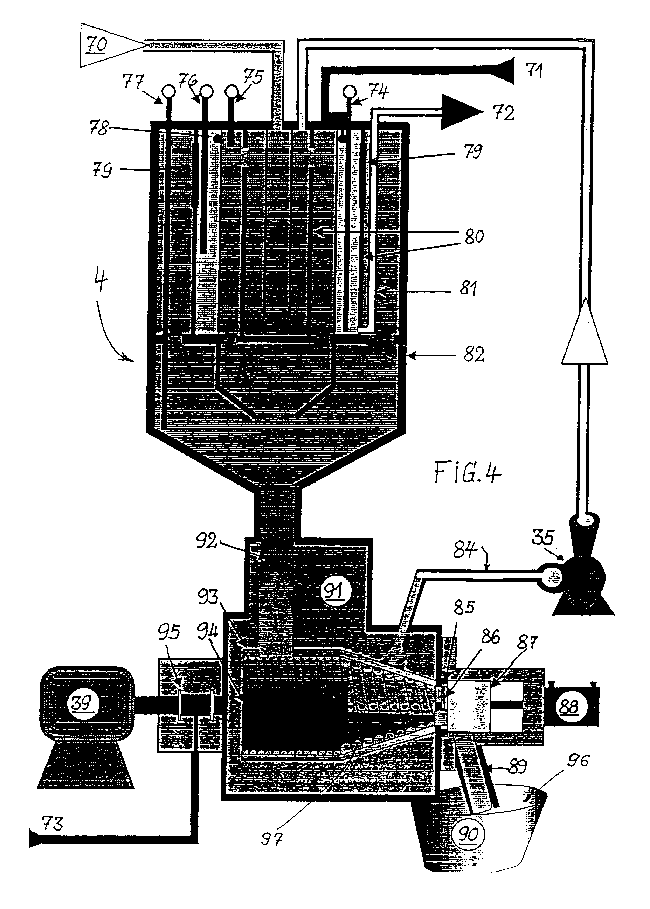

Behälter 4 ist als Mikrofilter mit Filtermembranen 79 ausgebildet, wie dies bestens aus der Fig. 4 erkennbar ist. Er weist einen Schlammaustrag 92 auf, der mit einer Schneckenpresse 91 für den Austrag von komprimiertem Schlamm 90 in Verbindung steht. Durch den Austrag und Schweb- und Feststoffen im Behälter 4 entsteht eine weiter zu verarbeitende Klarphase.

Der Behälter 5 ist mit einer geeigneten Filtermasse, wie Aktivkohle zur adsorptiven Bindung von toxischen oder anderen unerwünschten Stoffen oder Elementen als sogenanntes Schutzfilter ausgebildet. Darin wird die gewonnene Klarphase so aufgearbeitet, daß alle Feststoffe über 0,01 µm zurückgehalten werden, um eine praktisch feststofffreie Klarphase zur Weiterverarbeitung zu erhalten. Dabei dient die Verbindungsleitung 105 zur Überleitung der Klarphase aus der Mikrofiltration des Behälters 4 in das Schutzfilter 5 unter Strömungsverstärkung durch die Pumpe 35. Ein Rückstrom aus dem Schutzfilter 5 in die Mikrofiltration 4 ist durch die Leitung 106 möglich.

Die gewonnene Klarphase wird mit der Verbindungsleitung 102 aus dem Schutzfilter 5 in den Zwischenbehälter 6 geleitet. Der Behälter 6 ist als Zwischenbecken zur Zwischenpufferung einer bis dahin zur Klarphase gereinigten wäßrigen Flüssigkeit vor die folgenden Osmosezellen 7 vorgeschaltet. Eine Zirkulationsströmung durch die Osmosezellen 7 kann mit der Zirkulationsleitung 107 unter der Wirkung der Pumpe 37 eingestellt und aufrechterhalten werden. Der Zufluß aus dem Zwischenbehälter 6 in die Osmosezellen 7 wird mit Hilfe der Pumpe 36 und der Anschlußleitung 108 sichergestellt. Der Zwischenbehälter 6 dient zur Zwischenpufferung der Klarphase und garantiert einen sicheren Zulauf der Klarphase zu den Osmosezellen 7. Gleichzeitig wird hier mit der Meßsondeneinheit S der Leitwert überwacht.

Die Osmosezellen 7 sind - wie zuvor beschrieben - mit Mitteln zum Eintritt der Klarphase und mit Mitteln der Leitung 103 zum Austritt von gereinigter Reinwasserphase mit einer dazwischen angeordneten Dialyse-Membran (in an sich bekannter Weise) sowie mit einer Kreislauf-Leitungsanordnung 107 mit der darin befindlichen Umpumpe 37 ausgebildet. Aus diesen gelangt mit der Leitung 103 im Durchlauf durch die Durchflußmeßeinheit D die Reinwasserphase in den als Pufferbecken zur Aufnahme eines Tagesbedarfs an gereinigtem Brauchwasser ausgebildeten Behälter 8. Dieser weist einen Auslauf 21 für das vollständig gereinigte Wasser zur Abgabe an einen damit zu versorgenden Betrieb auf. Letztmalig wird darin mit der Meßsondeneinheit S die erreichte Leitfähigkeit und der erwünschte pH-Wert kontrolliert. Eine Rückspülleitung 109 mit einer darin angeordneten Pumpe 32 kann dazu verwendet werden, gereinigtes Rückspülwasser den Behältern 6, 3 und 1 zuzuführen.

Figur 2 zeigt in schematischer Darstellung die Steuerung des Verfahrens sowie der entsprechenden Anlage. Als zentrale Steuerungseinheit ist der Rechner 13 vorgesehen, dessen Ergebnisse im Monitor 12 erkennbar werden. An den Rechner 13 angeschlossen ist eine Dokumentation 11, worin die ermittelten und errechneten Daten in schriftlicher Form dokumentiert werden können. Der Rechner besitzt einen Eingang 10, der die in der Einheit 14 empfangenen Signale moduliert und an den Rechner 13 weitergibt. Aus dem Rechner 13 werden die Ausgangssignale in die Einheit 15 übertragen und von dort an die einzelnen Steuereinheiten 24 bis 26, 29 und 31 übertragen. Die Meßdatenerfassung wird durch die Einheiten 23, 28, 30 zur Erfassung von pH-Wert, Leitwert, Trübung, Sauerstoffgehalt oder Volumen, ferner durch die Niveauüberwachung 27 sowie die Überwachung des Mischfrequenzgenerators 25 durchgeführt mit entsprechenden Signalleitungen der Einheit 14 aufgeschaltet. Die Ausgänge der Einheit 15 steuern nach Maßgabe der Berechnung des Computers 13 die UV-Stromversorgung 24, den Mischfrequenzgenerator 25, die Stromversorgung für Pumpen und Ventile 26, die Dosierung von Säure/Lauge für pH-Wert-Einstellung 29 sowie die Spülung 31 für Umkehrosmose. In der Darstellung der Fig. 2 befindet sich unter den Einheiten zur Meßwerterfassung und zur Steuerung 23 bis 31 die Behälterbatterie 1 bis 9, wovon der Behälter 9 als reiner Pufferbehälter und zur Spülung der Osmosezellen 7 vorgesehen ist. Schmutzfrachtbeladenes Abwasser wird bei 20 in die Behälterbatterie 1 bis 9 eingetragen und Reinstwasser bei 21 aus Behälter 8 ausgetragen. Mit der Bezugsziffer 16 ist eine Einheit zur Reaktionsüberwachung und mit Ziffer 17 eine Einheit zur Sollwert-Überwachung bezeichnet.

In der Fig. 3 sind die Behälter 2 und 3 als Funktionseinheit nach Art einer UV-Bestrahlungskanone in Wirkungsverbindung mit dem Reaktionskatalysator zur Erzeugung eines Spannungsfeldes beigestellt. Mit 19 ist die Lufteinspeisung in die Behälter 2 und 3 bezeichnet. Die UV-Bestrahlungskanone 2 arbeitet im Zusammenwirken von Strahlungsenergie in Verbindung mit einer gezielten Luftzufuhr. Durch die Luftzufuhr werden Schadstoffmoleküle auseinandergetrieben, wodurch sich die Wirkungsfläche der Strahlung enorm vergrößert. Als Ergebnis werden schwerabbaubare Stoffe aufgespalten. Dadurch werden die entsprechenden Molekülverbände kleiner und neigen dazu, technisch handhabbare Feststoffverbindungen zu bilden, die nachfolgend in der Mikrofiltration mit Schlammaustrag von der Klarphase abgeschieden werden.

Im Behälter 3, dem sogenannten Reaktionskatalysator, erfolgt elektrische Energiezufuhr durch Elektroden mit gelochter Oberfläche. Eine Zugabe von Luft aus Sauerstoffspendern und Strömungsenergieträgern erhöht den Wirkungsgrad beträchtlich. Auch in dieser Reaktionseinheit 3 werden Schadstoffmoleküle durch Luft auseinandergetrieben, das Molekül-Luftgemisch wird durch die Elektrodenlöcher hindurchgespült und dabei unter der Wirkung der eingetragenen elektrischen Energie in der Struktur verändert. Im Endergebnis werden dabei Molekülverbände zu Schweb- bzw. Sinkstoffen kombiniert. Der Austrag dieser Stoffe ist sodann ohne Fremdstoffzugabe in der nachgeschalteten Mikrofiltration problemlos möglich. In der Fig. 3 weist die UV-Bestrahlungskanone 2 einen Luftzerstäuber 51 im Anschluß an die Luftleitung 19 auf und weiterhin im UV-Gehäuse 60 ein Lichtquellengehäuse 59 mit der UV-Lichtquelle 61, fernerhin den Dichtungsflansch 62 und die Spannungsversorgung 63 für die UV-Lichtquellen 61. Die Pumpe 33 fördert durch die Zirkulationsleitung 52 Wasser im Reaktionsumlauf durch das UV-Bestrahlungsfeld in den Reaktions-Katalysator 3. Dieser weist die Niveauschalter 46, 48, 49 und den Luftfilter 47 einer Entlüftung auf. Weiterhin ist ein Spülwasserzulauf 45 vorgesehen. Zur Einspeisung von Wechselstrom sind die Leitungen 40, 41 und zur Zuleitung von Gleichstrom die Leitungen 42, 43 vorgesehen. Der Rohwassereinlauf ist mit 44 gekennzeichnet, während der Auslauf der elektrophysikalisch behandelten Phase mit 50 bezeichnet ist. Ferner weist der Behälter 3 einen Luftzerstäuber 53 im Bereich unterhalb der Elektroden bzw. Reaktorplatten 54 auf. Mit 55 ist eine Elektrodendurchführung, mit 56 sind Wassereinlaßdüsen und 57 Reaktorplattenanschlüsse bezeichnet. Der Behälter weist das Gehäuse 58 auf.

In der Fig. 4 ist der Mikrofilter mit Schlammaustrag dargestellt. Der Behälter 4 weist den Wassereinlauf 70 und einen Spülwasserzulauf 71 auf. Ein zweiter Spülwasserzulauf 73 ist für die Spülkammer 95 der Schneckenpresse 91 vorgesehen. Der Auslauf der Klarphase ist mit 72 bezeichnet. Im Behälter 4 sind Niveauschalter 74 bis 77 angeordnet. Innerhalb der Räume für die Klarphase ist ein Spülwassersprühkopf 78 angeordnet. Weiterhin enthält der Behälter 4 als Filterelemente die Filtermembranen 79 in bevorzugt rotationssymmetrischer Anordnung. Die hindurchtretende Klarphase ist mit 81 bezeichnet, das Gehäuse mit der Ziffer 82, die Beruhigungskanäle mit der Ziffer 80. Eine Umwälzung von Wasser aus der Filtratwasser-Absaugung 84 findet mit der Pumpe 35 statt. Die Kompressionsschnecke im Schneckengehäuse der Schneckenpresse 91 wird durch den Schlammaustrag 92 mit Sediment versorgt und weist die Filtermembrane 93 sowie Reinigungsdüsen 94 auf. An der Austragsseite befindet sich eine Dichtung 85 mit einem Abstreifer 86 und ferner mit einem Kompressionskolben 87 und einem entsprechenden Kolben-Bewegungsapparat 88. Der Kolben 87 öffnet periodisch durch Zurückziehen den Schlammaustrag 89, welcher Schlamm in die Auffangwanne 96 fördert. Angetrieben wird die Kompressionsschnecke durch den Motor 39, wobei die Antriebswelle durch eine Spülkammer 95 hindurchgeführt wird, welche durch den Spülwasserzulauf 73 mit Spülwasser beaufschlagt ist.

## Patentansprüche

1. Verfahren zur Gewinnung von Brauchwasser aus Abwasser durch Vorreinigen in einer Vorbehandlungsstufe, Nachreinigen des vorgereinigten Wassers von Fremdstoffen und/oder gelösten Verunreinigungen sowie Minimierung des Gehaltes an mitgeführten oder anfallenden Feststoffen,
**dadurch gekennzeichnet,**
daß das Wasser in einer Folge von Reinigungsschritten, umfassend:
1. Vorabscheiden von gröberen Schmutzpartikeln
2. Einstellen eines konstant vorgegebenen pH-Wertes
3. Aufbereiten des Wassers zu einer Klarphase durch
3.1 physikalische Behandlung unter Einwirkung von Strahlungs- und Elektroenergie im Zusammenwirken mit Sauerstoff und eingebrachter Strömungsenergie auf schwerabbaubare Molekularverbindungen unter Ausfällen von freigesetzten Schwebstoffen;
3.2 Feststoffminimierung durch Mikrofiltration der mitgeführten und/oder ausgefällten Mikropartikeln mit Schlammaustrag aus dem System;
4. Endreinigen der Klarphase des Wassers durch Abscheiden von Lösungsanteilen noch nicht erfaßter Verbindungen mittels Osmosebehandlung
zu gereinigtem Brauchwasser aufbereitet wird.

2. Verfahren nach Anspruch 1,
**dadurch gekennzeichnet,**
daß die physikalische Behandlung in zwei Stufen durchgeführt wird, wobei das vorbehandelte und im pH-Wert eingestellte Wasser in einer ersten Stufe im Kreislauf durch ein UV-Bestrahlungsfeld geführt und dabei zugleich Luft als Sauerstoffträger zugeführt, und in einer zweiten Stufe das so zur weiteren Aufbereitung vorbereitete Wasser im Kreislauf durch ein elektrisches Spannungsfeld hindurchgeleitet und dem Kreislaufwasser zugleich durch Einleiten von Luft, Sauerstoff und Strömungsenergie zugeführt wird.

3. Verfahren nach Anspruch 1 oder 2,
**dadurch gekennzeichnet,**
daß die einzelnen Reinigungsschritte 1. bis 4. jeweils in separaten Reaktorbehältern (1 bis 8) durchgeführt werden.

4. Verfahren nach einem oder mehreren der Ansprüche 1 bis 3,
**dadurch gekennzeichnet,**
daß die Reinigungsschritte 1. bis 4. unter angepaßter Zufuhr von Strömungsenergie durch Verwendung einzelner, unabhängiger Umpumpen (33 - 37) vorgenommen werden.

5. Verfahren nach einem oder mehreren der Ansprüche 1 bis 4,
**dadurch gekennzeichnet,**
daß aus einzelnen Stufen Wasser zum Rückspülen entnommen und einer oder mehreren vorhergehenden Stufen zugeführt wird.

6. Verfahren nach einem oder mehreren der Ansprüche 1 bis 5,
**dadurch gekennzeichnet,**
daß bei der Mikrofiltration Schlamm unter Verwendung einer Schneckenpresse (17) ausgetragen wird.

7. Verfahren nach Anspruch 6,
**dadurch gekennzeichnet,**
daß bei der Mikroflitration alle Feststoffe mit Partikelgrößen über 0,01 µm zurückgehalten werden.

8. Verfahren nach einem oder mehreren der Ansprüche 1 bis 7,
**dadurch gekennzeichnet,**
daß die Osmose als Umkehrosmose durchgeführt wird.

9. Verfahren nach einem oder mehreren der Ansprüche 1 bis 8,
**dadurch gekennzeichnet,**
daß die Osmose als Elektroosmose durchgeführt wird.

10. Verfahren nach einem oder mehreren der Ansprüche 1 bis 9,
**dadurch gekennzeichnet,**
daß Betriebsparameter jeder Reinigungsstufe unter Verwendung elektronischer Meß- und Regelmittel überwacht, die Werte einem Zentralcomputer (30) aufgeschaltet und von diesem nach Programm Korrekturen veranlaßt werden.

11. Verfahren nach Anspruch 1 oder 2,
**dadurch gekennzeichnet,**
daß dem elektrischen Spannungsfeld eine Mischfrequenz-Amplitudenmodulation aufgeschaltet wird.

12. Verfahren nach Anspruch 1 oder 2,
**dadurch gekennzeichnet,**
daß das nach der Mikrofiltration erhaltene Filtrat durch eine ein- oder mehrstufige Osmosezelle (7) hindurchgepumpt und das dabei anfallende Permeat dem Produktionskreislauf wieder zugeführt wird.

13. Anlage zur Gewinnung von Brauchwasser aus Abwasser, insbesondere zur Durchführung des Verfahrens nach den vorhergehenden Ansprüchen,
**dadurch gekennzeichnet,**
daß sie wenigstens eine der Anzahl von Reinigungsstufen 1. bis 4. entsprechende Anzahl separater Behälter (1 bis 9) aufweist, die als funktionell zusammenwirkende Wasserreinigungsbatterie in Durchlaufrichtung des Wassers in Reihe geschaltet sind.

14. Anlage nach Anspruch 13,
**dadurch gekennzeichnet,**
daß jeder Behälter (1 bis 8) als Reaktor mit Mitteln für die Durchführung wenigstens eines in sich abgeschlossenen Arbeitsschrittes ausgebildet ist und insbesondere die folgenden Merkmale aufweist:
- Behälter (1) ist im wesentlichen als Pufferbecken zur Aufnahme eines Tagesbedarfs von Wasser, ferner mit einem Rührwerk (38) sowie mit pH-Meß- und Einstellmitteln (23) ausgebildet;
- Behälter (3) ist mit einer Anzahl kaskadenförmig angeordneter Elektroden (54) mit Spannungszuführungen (40 - 43) zum Aufbau eines elektrischen Spannungsfeldes sowie mit einer Düsenanordnung (53) zum Einblasen von Luft als Katalyse-Reaktor ausgebildet und weist einen im Nebenschluß angeordneten UV-Bestrahlungsreaktor (2) mit Luftzufuhrorganen (51) auf;
- Behälter (4) ist als Mikrofilter mit Filtermembranen (79) ausgebildet und weist einen Schlammaustrag (92) auf, der mit einer Schneckenpresse (91) für Schlamm (90) in Verbindung steht;
- Behälter (5) ist bevorzugt mit einer geeigneten Filtermasse wie Aktivkohle zur adsorptiven Bindung von toxischen oder anderen unerwünschten Stoffen oder Elementen als sogenanntes Schutzfilter ausgebildet;
- Behälter (6) ist als Zwischenbecken zur Zwischenpufferung einer bis dahin zur Klarphase gereinigten wäßrigen Flüssigkeit vor die folgenden Osmosezellen (7) vorgeschaltet;
- Behälter (7) ist als Osmosezelle mit Mitteln zum Eintritt der Klarphase und Austritt von gereinigter Reinwasserphase und einer dazwischen angeordneten Dialyse-Membran sowie mit einer Kreislauf-Leitungsanordnung (107) mit einer Umpumpe (37) ausgebildet;
- Behälter (8) ist als Pufferbecken für die Reinwasserphase bevorzugt zur Aufnahme eines Tagesbedarfs an gereinigtem Brauchwasser ausgebildet.

15. Anlage nach einem der Ansprüche 13 oder 14,
**dadurch gekennzeichnet,**
daß der UV-Bestrahlungsreaktor (2) an eine Kreislaufleitung (52) mit einer darin angeordneten Kreislaufpumpe (33) angeschlossen und diese Kreislaufleitung (52) durch den elektrischen Katalyse-Reaktor (58) hindurchführend ausgebildet ist.

16. Anlage nach einem der Ansprüche 13 oder 14
**dadurch gekennzeichnet,**
daß die Schneckenpresse (91) des Mikrofilters (4) eine Kompressionsschnecke (97) mit unterschiedlicher Steigung am Schneckenkonus aufweist, daß an dessen Austragsseite eine Dichtung (85) mit Abstreifer (86) angeordnet ist und daß der Austrag der Schneckenpresse (91) mit einem von einem Kolbenbewegungsapparat (88) steuerbaren Kompressionskolben (87) in Verbindung steht.

17. Anlage nach Anspruch 16,
**dadurch gekennzeichnet,**
daß im Bereich des Schneckenkonus der Kompressionsschnecke (97) eine Filtratwasser-Absaugung (84) angeordnet ist, die mittels der Umpumpe (35) und einer Filtratwasserleitung mit dem Zulaufbereich des Mikrofilters (4) verbunden ist.
